# FASCICULE DE BREVET EUROPEEN

(11) **EP 3 536 605 B1**
(45) Date de publication et mention de la délivrance du brevet: **21.07.2021**
(21) Numéro de dépôt: 19158849.0
(22) Date de dépôt: 22.02.2019
(51) Int. Cl.: B64C 3/18, B64C 3/26

(54) **CAISSON DE TORSION POUR AERONEF FORME D'ELEMENTS SOUDES DEUX-A-DEUX ET PROCEDE DE FABRICATION DE CELUI-CI**
TORSIONSKASTEN FÜR LUFTFAHRZEUGE, DER AUS PAARWEISE ZUSAMMENGESCHWEISSTEN ELEMENTEN GEBILDET WIRD, UND SEIN HERSTELLUNGSVERFAHREN
TORSION BOX FOR AIRCRAFT MADE UP OF ITEMS WELDED TWO BY TWO AND METHOD FOR MANUFACTURING SAME

(30) Priorité: 09.03.2018 FR 1852070
(43) Date de publication de la demande: 11.09.2019
(73) Titulaire: Airbus Operations S.A.S., 31060 Toulouse (FR)
(72) Inventeur: Pirozzi, Umberto, 44000 Nantes (FR)
(74) Mandataire: Gicquel, Olivier Yves Gérard

(56) Documents cités:
- WO-A1-2009/103635
- US-A- 2 405 643
- US-A1- 2006 027 630
- US-A1- 2009 283 509
- US-A1- 2009 294 018
- US-A1- 2013 181 092
- US-A1- 2016 046 381

## Description

### DOMAINE TECHNIQUE

La présente invention se rapporte au domaine de la structure des aéronefs, et concerne plus particulièrement un caisson de torsion pour aéronef et un procédé de fabrication d'un tel caisson de torsion. Ce dernier peut notamment former un caisson central de voilure, également dénommé « *Center Wing Box »* (« CWB »), ainsi qu'un caisson latéral de voilure, également dénommé « *Outboard Wing Box* » (« OWB »).

### ÉTAT DE LA TECHNIQUE ANTÉRIEURE

Dans un aéronef comportant un fuselage et une voilure comportant deux ailes fixées au fuselage de part et d'autre de celui-ci, le fuselage intègre en général un caisson de torsion, dénommé caisson central de voilure, sur lequel sont fixés des caissons de torsion respectifs des ailes, généralement dénommés caissons latéraux de voilure.

Chacun de ces caissons de torsion comporte typiquement un panneau supérieur, également dénommé panneau extrados, un panneau inférieur, également dénommé panneau intrados, ainsi qu'un longeron avant et un longeron arrière qui relient chacun le panneau inférieur au panneau supérieur, de sorte que l'ensemble de ces éléments délimite un volume intérieur du caisson de torsion.

Chacun des caissons de torsion intègre en général des nervures de rigidification logées dans le volume intérieur du caisson et reliant entre eux les panneaux inférieur et supérieur et les longerons avant et arrière du caisson.

Ces caissons de torsion supportent les efforts statiques et dynamiques s'exerçant sur les ailes, ainsi que, dans le cas du caisson central de voilure, les contraintes de flexion du fuselage.

Un tel caisson de torsion comporte un nombre élevé de pièces, et un nombre d'autant plus élevé d'organes de fixation, tels que des boulons et/ou des rivets, pour assembler les pièces les unes aux autres.

Par conséquent, le poids d'un caisson de torsion de ce type est relativement élevé, et la fabrication d'un tel caisson requiert un nombre élevé d'opérations d'assemblage et d'opérations d'étanchéification entre les pièces, ce qui se traduit notamment par un coût élevé et une cadence de production relativement faible. Un caisson de torsion pour aéronef est connu du US 2006/027630 A1.

### EXPOSÉ DE L'INVENTION

L'invention a notamment pour but d'apporter une solution simple, économique et efficace à ces problèmes, permettant d'éviter au moins en partie les inconvénients précités.

Elle propose à cet effet un caisson de torsion pour aéronef, comprenant des profilés creux et des nervures de rigidification, agencés en alternance les uns derrière les autres, c'est-à-dire bout-à-bout, selon une direction d'alignement, chaque profilé creux présentant deux bords de profilé respectifs opposés ainsi que deux ouvertures respectives opposées circonscrites par les deux bords de profilé respectivement, chaque profilé creux étant conformé de manière à entourer intégralement un espace interne reliant mutuellement les deux ouvertures du profilé creux, et chaque nervure de rigidification comprenant une âme respective, et une semelle respective qui s'étend à partir de l'âme tout autour de cette dernière, et qui présente deux bords de semelle agencés respectivement de part et d'autre de l'âme et respectivement soudés à deux des bords de profilés respectifs de deux profilés creux correspondants.

D'une manière générale, l'invention permet de simplifier considérablement la fabrication d'un caisson de torsion d'aéronef, notamment du fait d'une réduction drastique de la variété des pièces constituant le caisson de torsion, et du fait que la fabrication du caisson de torsion ne requiert pas d'opérations d'étanchéification aux jonctions entre les différentes pièces. La configuration du caisson de torsion se prête en outre à l'utilisation de techniques de fabrication simples et efficaces, telles que l'extrusion, en ce qui concerne les pièces constituant le caisson. De plus, en évitant le recours à un grand nombre d'organes de fixation de type boulons ou rivets, l'invention permet en outre de réduire la masse du caisson de torsion.

De préférence, chaque profilé creux est formé d'un seul tenant.

Dans des modes de réalisation préférés de l'invention, chaque profilé creux et la semelle de chaque nervure de rigidification présentent des ondulations transversalement à la direction d'alignement.

De préférence, le caisson de torsion comprend en outre des poutres sur caisson raccordées respectivement aux semelles respectives des nervures de rigidification et s'étendant d'un même côté du caisson de torsion, à l'extérieur d'un volume intérieur du caisson de torsion délimité par les profilés creux et par les semelles respectives des nervures de rigidification.

Dans des modes de réalisation préférés de l'invention, le caisson de torsion comprend en outre deux nervures d'extrémité agencées à deux extrémités opposées du caisson de torsion et fixées respectivement à deux profilés creux correspondants.

L'invention concerne également un aéronef, comprenant au moins un caisson de torsion du type décrit ci-dessus, formant un caisson central de voilure ou un caisson latéral de voilure.

L'invention concerne aussi un procédé de fabrication d'un caisson de torsion pour aéronef, comprenant les étapes suivantes :
A) mettre à disposition des profilés creux, présentant chacun deux bords de profilé respectifs opposés ainsi que deux ouvertures respectives opposées circonscrites par les deux bords de profilé respectivement, chaque profilé creux étant conformé de manière à entourer intégralement un espace interne reliant mutuellement les deux ouvertures du profilé,
B) mettre à disposition des nervures de rigidification, comprenant chacune une âme respective, et une semelle respective qui s'étend à partir de l'âme tout autour de cette dernière, et qui présente deux bords de semelle agencés respectivement de part et d'autre de l'âme, puis
C) souder chacun des deux bords de semelle de la semelle de chaque nervure de rigidification à un bord de profilé correspondant d'un profilé creux correspondant, au moyen d'une technique de soudage bord-à-bord, de manière à obtenir le caisson de torsion, dans lequel les profilés creux et les nervures de rigidification sont agencés en alternance les uns derrière les autres selon une direction d'alignement.

De préférence, la technique de soudage bord-à-bord est choisie parmi le soudage par friction malaxage et le soudage laser.

De préférence, l'étape A comporte la fabrication des profilés creux par extrusion.

De préférence, la fabrication des profilés creux par extrusion comporte, pour chacun des profilés creux, la fabrication par extrusion de profilés élémentaires puis l'assemblage des profilés élémentaires par soudage.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en perspective d'éléments destinés à constituer un caisson de torsion selon un mode de réalisation préféré de l'invention ;
- la figure 2 est une vue schématique en perspective d'un caisson de torsion selon le mode de réalisation préféré de l'invention, formé à partir des éléments de la figure 1 ;
- les figures 3, 4 et 5 sont des vues schématiques en perspective respectivement d'un profilé creux, d'une nervure de rigidification, et d'une nervure d'extrémité, faisant partie des éléments de la figure 1 ;
- les figures 6 et 7 sont des vues schématiques en perspective de variantes de réalisation respectivement d'une nervure de rigidification et d'un profilé creux ;
- la figure 8 est une vue schématique en perspective d'un profilé élémentaire entrant dans la constitution du profilé creux de la figure 7.

Dans l'ensemble de ces figures, des références identiques peuvent désigner des éléments identiques ou analogues.

### EXPOSÉ DÉTAILLÉ DE MODES DE RÉALISATION PRÉFÉRÉS

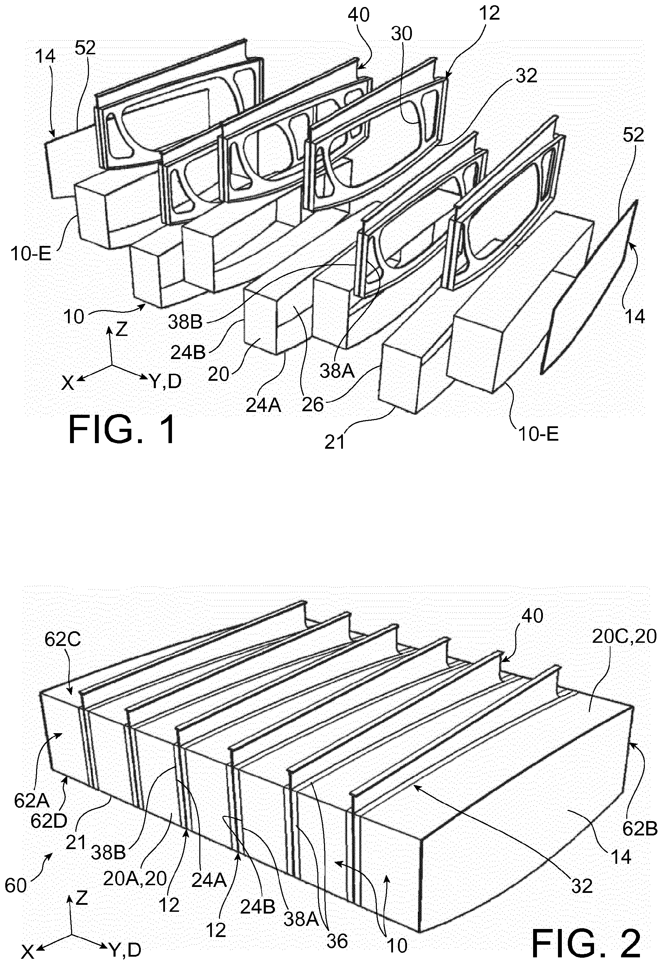

La figure 1 illustre les éléments destinés à être assemblés bout-à-bout pour former un caisson de torsion pour aéronef selon un mode de réalisation préféré de l'invention, par exemple un caisson central de voilure.

Dans la description qui suit, les directions X, Y et Z sont définies par référence à l'orientation prévue pour le caisson de torsion au sein d'un aéronef. La direction longitudinale X est définie conventionnellement comme étant parallèle à l'axe de roulis de l'aéronef, la direction transversale Y comme étant parallèle à l'axe de tangage de l'aéronef, et la direction verticale Z comme étant parallèle à l'axe de lacet de l'aéronef.

Les éléments visibles sur la figure 1 comprennent des profilés creux 10, par exemple au nombre de sept, des nervures de rigidification 12, par exemple au nombre de six, et deux nervures d'extrémité 14. D'une manière générale, le nombre de nervures de rigidification 12 est égal au nombre de profilés creux 10 diminué d'une unité.

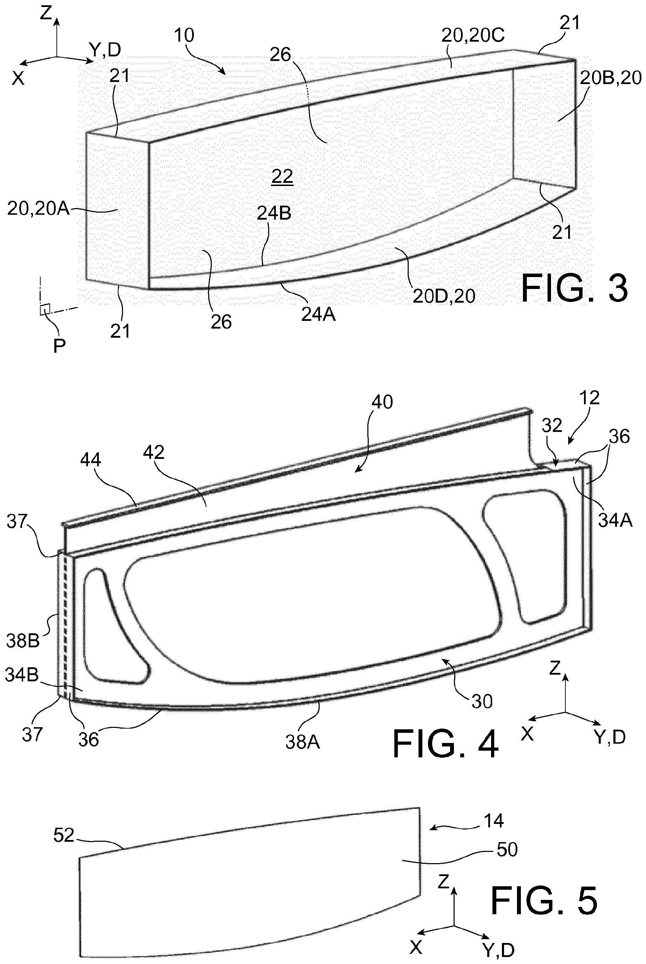

Comme cela apparaît plus clairement sur la figure 3, chaque profilé creux 10 présente plusieurs parois 20 planes ou incurvées, de préférence au nombre de quatre, reliées deux à deux au niveau d'arêtes 21 du profilé, de sorte que le profilé présente, dans un plan P orthogonal à la direction des arêtes, une section fermée, et entoure ainsi intégralement un espace interne 22 du profilé. Dans l'exemple illustré, les parois 20 comportent une paroi avant 20A et une paroi arrière 20B de forme rectangulaire plane, ainsi qu'une paroi supérieure 20C et une paroi inférieure 20D de forme rectangulaire incurvée.

Ainsi, chaque profilé creux 10 présente deux bords de profilé 24A, 24B respectifs opposés, formés chacun par un ensemble de bords respectifs des parois 20 situés d'un même côté du profilé creux.

Chaque profilé creux 10 présente donc également deux ouvertures 26 respectives opposées, circonscrites par les deux bords de profilé 24A, 24B respectivement. L'espace interne 22 relie ainsi l'une à l'autre les deux ouvertures 26.

Le nombre de parois 20 est identique d'un profilé creux 10 à l'autre.

Les profilés creux 10 sont de formes respectives identiques et sont chacun de section constante, dans le cas où le caisson de torsion à fabriquer est de section constante. En variante, dans le cas où le caisson de torsion à fabriquer est de section évolutive, les profilés creux 10 peuvent présenter chacun une section évolutive, et présenter des sections différentes d'un profilé creux à l'autre.

Les profilés creux 10 sont de préférence fabriqués d'un seul tenant par extrusion.

En variante, les profilés creux 10 peuvent être fabriqués à partir de plusieurs pièces soudées deux-à-deux, par exemple quatre pièces. Dans ce cas, pour chacun des profilés creux 10, les pièces, qui sont de préférence fabriquées chacune par extrusion, intègrent avantageusement les angles du profilé. Par exemple, chaque pièce intègre un angle correspondant du profilé creux 10, ou deux des pièces intègrent deux angles correspondants tandis que les deux autres pièces n'intègrent aucun angle. Ainsi, le raccordement des pièces deux-à-deux peut être opéré par une technique de soudage bord à bord. Ce type de technique présente notamment l'avantage de meilleures propriétés mécaniques par comparaison avec les techniques de soudage par transparence, qui seraient nécessaires si les pièces étaient soudées deux-à-deux au niveau des arêtes du profilé creux.

En référence aux figures 1 et 4, chaque nervure de rigidification 12 comprend une âme 30, et une semelle 32, qui s'étend à partir - et tout autour - de l'âme 30. La semelle 32 forme un rebord d'extrémité de l'âme 30 s'étendant sur toute la périphérie de cette dernière, de part et d'autre de l'âme. L'ensemble formé par l'âme 30 et la semelle 32 présente localement une section sensiblement en T, tout au long de la périphérie de l'âme 30.

L'âme 30 présente de préférence plusieurs ajours.

La semelle 32, qui s'étend continument autour de l'âme 30 de manière à présenter une section fermée, est formée de parois 36, jointes deux-à-deux au niveau d'arêtes 37. Le nombre des parois 36 de chaque semelle 32 est égal au nombre des parois 20 de chaque profilé creux 10.

La semelle 32 présente deux bords de semelle 38A, 38B s'étendant respectivement de part et d'autre de l'âme 30.

Dans le mode de réalisation illustré qui concerne un caisson central de voilure, chaque nervure de rigidification 12 comporte en outre une poutre sur caisson 40 destinée à supporter un plancher d'aéronef. Une telle poutre s'étend d'un côté opposé au côté de l'âme 30, à partir de l'une des parois 36 de la semelle 32. Plus précisément, la poutre sur caisson 40 comporte par exemple une âme 42 ayant une extrémité inférieure raccordée à une paroi 36 supérieure de la semelle 32, et un talon 44 s'étendant à partir de l'extrémité opposée de l'âme 42 (c'est-à-dire son extrémité supérieure).

Les nervures de rigidification 12 peuvent être réalisées chacune d'un seul tenant par usinage à partir d'une unique pièce brute.

Les nervures d'extrémité 14 sont illustrées de manière très schématique sur les figures 1, 2 et 5, sous la forme d'une simple plaque 50 présentant un bord de nervure 52 (figure 5), mais ces nervures d'extrémité 14 peuvent présenter une configuration plus complexe. En particulier, dans le mode de réalisation illustré qui concerne un caisson central de voilure, les nervures d'extrémité 14 sont destinées à la jonction voilure-caisson central de voilure, et sont par exemple du type décrit dans le document US20120286090.

Les éléments 10, 12, 14 ci-dessus ayant été mis à disposition au cours d'étapes A et B d'un procédé de fabrication du caisson de torsion selon l'invention, un tel procédé comporte ensuite une étape C consistant à fixer ces éléments deux à deux par soudage, en alternant les profilés creux 10 et les nervures de rigidification 12. Dans le mode de réalisation illustré, l'étape C consiste en outre à fixer les deux nervures d'extrémité 14 aux extrémités de l'ensemble ainsi formé.

Plus précisément, l'étape C consiste à souder chaque bord de semelle 34A, 34B de la semelle 32 de chaque nervure de rigidification 12 à un bord de profilé 24A ou 24B correspondant d'un profilé creux 10, moyennant une disposition bout-à-bout en alternance des profilés creux 10 et des nervures de rigidification 12, c'est-à-dire les uns derrières les autres, selon une direction d'alignement D. La direction d'alignement D correspond à la direction des arêtes 21 de chaque profilé creux 10, ainsi qu'à la direction transversale Y définie ci-dessus.

Les opérations de soudage de l'étape C sont donc des opérations de soudage bord à bord et sont de préférence mises en œuvre au moyen de la technique du soudage par friction malaxage ou de la technique du soudage laser.

L'étape C consiste en outre à fixer chacune des deux nervures d'extrémité 14 respectivement sur les deux profilés creux 10-E (figure 1) agencés respectivement aux extrémités de l'ensemble formé par les profilés creux 10 et les nervures de rigidification 12. Cette fixation peut être mise en œuvre de manière conventionnelle, au moyen de ferrure boulonnées ou rivetées. En variante, chacune des deux nervures d'extrémité 14 peut comporter un rebord par lequel ladite nervure est fixée au profilé creux 10-E correspondant par soudage bord à bord, au moyen de la technique du soudage par friction malaxage ou de la technique du soudage laser.

La figure 2 illustre le caisson de torsion 60 ainsi obtenu.

Ce caisson présente une paroi avant 62A, une paroi arrière 62B, une paroi supérieure 62C et une paroi inférieure 62D, qui sont respectivement formées par un ensemble de parois 20 des profilés creux 10 et de parois 36 des semelles 32 des nervures de rigidification 12, agencées bout-à-bout. Les parois 62A-62D délimitent ainsi un volume intérieur du caisson, comprenant les espaces internes 22 respectifs des profilés creux 10.

Dans un tel caisson de torsion 60, les âmes 30 respectives des nervures de rigidification 12 permettent la reprise du moment de flexion selon la direction d'alignement D, c'est-à-dire selon la direction transversale Y de l'aéronef, ainsi que les efforts de cisaillement selon la direction verticale Z de l'aéronef. Dans le cas particulier d'un caisson central de voilure, il s'agit ainsi des contraintes de flexion du fuselage et des efforts de cisaillement appliqués par les ailes. De plus, les poutres sur caisson 40, qui s'étendent toutes d'un même côté du caisson, à l'extérieur du volume intérieur du caisson, permettent la reprise des efforts liés au support d'un plancher de l'aéronef.

La structure en caisson, formée par les parois 20 des profilés creux 10 et les parois 36 des semelles 32 des nervures de rigidification 12, permet la reprise des moments de flexion selon les directions X et Z, c'est-à-dire des efforts de flexion appliqués par les ailes, dans le cas particulier d'un caisson central de voilure.

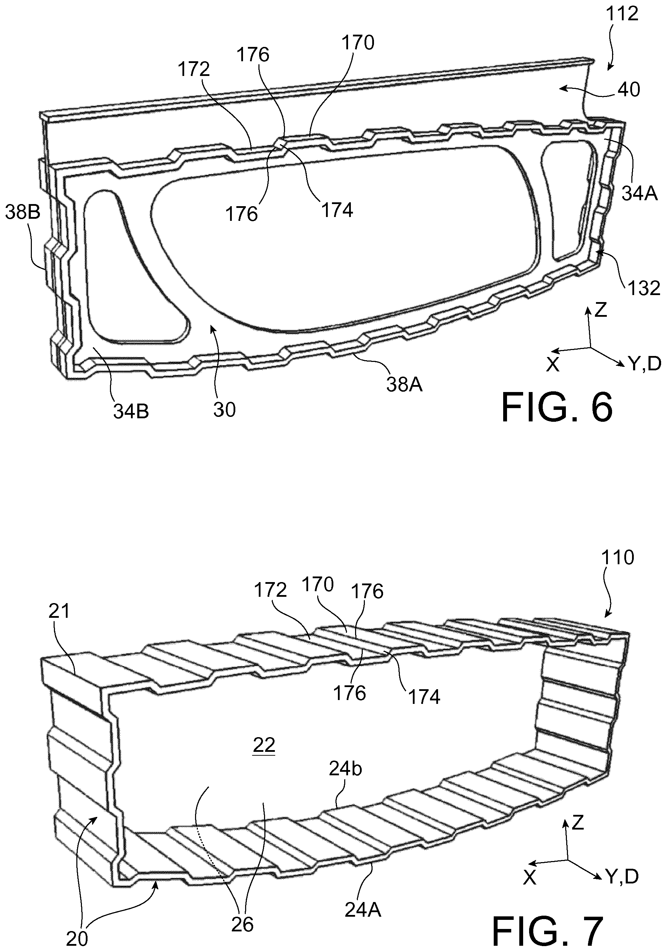

À cet effet, les figures 6 et 7 illustrent respectivement des variantes de réalisation d'une nervure de rigidification 112 et d'un profilé creux 110, qui se distinguent des éléments 12 et 10 décrits ci-dessus du fait que le profilé creux 110 et la semelle 132 de la nervure de rigidification 112 présentent des ondulations, transversalement à la direction d'alignement D, afin d'accroître la raideur des profilés creux et des semelles respectives des nervures de rigidification, et d'améliorer ainsi leur faculté à reprendre les moments de flexion selon les directions X et Z.

Dans l'exemple illustré, les ondulations sont formées par une disposition en alternance de parties externes 170 et de parties internes 172 reliées deux à deux par des plans inclinés 174, de manière à définir des arêtes 176 à la jonction de chaque partie externe 170 ou interne 172 avec le plan incliné 174 adjacent. Dans cet exemple, ces différentes parties sont de forme sensiblement plane. Les ondulations présentent ainsi une forme anguleuse ou crénelée. En variante, les ondulations peuvent être en forme de sinusoïde ou, plus généralement, être formées d'une alternance de parties convexes et concaves, ou encore être formées d'une alternance de parties planes et de parties convexes ou concaves.

Par ailleurs, chaque profilé creux 110 peut être réalisé d'un seul tenant par extrusion.

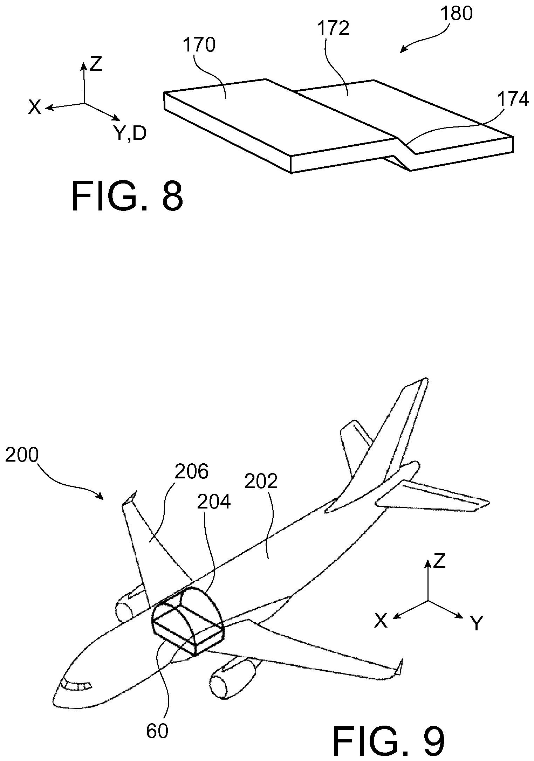

En variante, chaque profilé creux 110 peut être obtenu à partir de profilés élémentaires 180, dont un exemple est illustré sur la figure 8. Ce profilé élémentaire 180 est formé d'une plaque présentant un décroché définissant une partie haute ou externe 170 et une partie basse ou interne 172, raccordées l'une à l'autre par un plan incliné 174. Certains des profilés élémentaires comportent en outre un deuxième plan incliné agencé à une extrémité du profilé élémentaire, ou un angle, afin que l'ensemble des profilés élémentaires permette effectivement d'obtenir l'intégralité d'un profilé creux 110.

La fabrication d'un profilé creux 110 comporte dans ce cas le soudage des profilés élémentaires 180 correspondants, deux à deux.

Afin d'optimiser les propriétés de raideur du caisson de torsion 60 tout en limitant la masse de ce dernier, les profilés creux 10 ou 110 et la semelle 32 ou 132 de chaque nervure de rigidification 12, 112 présentent préférentiellement une épaisseur de paroi comprise entre 5 mm et 10 mm, tandis que l'âme 30 de chaque nervure de rigidification 12, 112 présente préférentiellement une épaisseur de paroi comprise entre 3 mm et 8 mm.

Pour optimiser la continuité des efforts voilures des raidisseurs peuvent être attachés à l'extérieur du caisson de torsion.

La figure 9 illustre très schématiquement un aéronef 200, en l'occurrence un avion, comportant notamment :
- un fuselage 202 comportant notamment des cadres circonférentiels 204,
- un caisson central de voilure constitué du caisson de torsion 60 décrit ci-dessus, auquel sont fixés certains des cadres de fuselage 204, et
- des ailes 206, également fixées au caisson central de voilure.

L'invention est illustrée ci-dessus dans son application à un caisson central de voilure mais peut, en variante, être appliquée à un caisson latéral de voilure.

D'une manière générale, l'invention permet donc de simplifier considérablement la fabrication d'un caisson de torsion d'aéronef, notamment du fait d'une réduction drastique de la variété des pièces constituant le caisson de torsion, du fait que le procédé de fabrication selon l'invention ne requiert pas d'opérations d'étanchéification aux jonctions entre les différentes pièces, et par la possibilité d'utiliser l'extrusion pour fabriquer la majeure partie des pièces constituant le caisson. De plus, en évitant le recours à un grand nombre d'organes de fixation de type boulons ou rivets, l'invention permet en outre de réduire la masse du caisson de torsion.

Dans un cas typique d'application, l'invention permet d'augmenter la cadence de production des caissons de torsion d'un facteur 10, tout en réduisant par deux le coût de fabrication et en permettant un allègement de l'ordre de 30% de la masse des caissons, du fait notamment de la suppression de 99% des organes de fixation.

## Revendications

1. Caisson de torsion (60) pour aéronef, **caractérisé en ce qu'**il comprend des profilés creux (10, 110) et des nervures de rigidification (12, 112), agencés bout-à-bout en alternance, c'est-à-dire les uns derrières les autres, selon une direction d'alignement (D), chaque profilé creux (10, 110) présentant deux bords de profilé (24A, 24B) respectifs opposés ainsi que deux ouvertures (26) respectives opposées circonscrites par les deux bords de profilé (24A, 24B) respectivement, chaque profilé creux (10, 110) étant conformé de manière à entourer intégralement un espace interne (22) reliant mutuellement les deux ouvertures (26) du profilé creux, et chaque nervure de rigidification (12, 112) comprenant une âme (30) respective, et une semelle (32, 132) respective qui s'étend à partir de l'âme (30) tout autour de cette dernière, et qui présente deux bords de semelle (38A, 38B) agencés respectivement de part et d'autre de l'âme (30) et respectivement soudés à deux des bords de profilés (24B, 24A) respectifs de deux profilés creux (10, 110) correspondants.

2. Caisson de torsion selon la revendication 1, dans lequel chaque profilé creux (10, 110) est formé d'un seul tenant.

3. Caisson de torsion selon la revendication 1 ou 2, dans lequel chaque profilé creux (110) et la semelle (132) de chaque nervure de rigidification (112) présentent des ondulations transversalement à la direction d'alignement (D).

4. Caisson de torsion selon l'une quelconque des revendications 1 à 3, comprenant en outre des poutres sur caisson (40) raccordées respectivement aux semelles (32, 132) respectives des nervures de rigidification (12, 112) et s'étendant d'un même côté du caisson de torsion (60), à l'extérieur d'un volume intérieur du caisson de torsion délimité par les profilés creux (10, 110) et par les semelles (32, 132) respectives des nervures de rigidification (12, 112).

5. Caisson de torsion selon l'une quelconque des revendications 1 à 4, comprenant en outre deux nervures d'extrémité (14) agencées à deux extrémités opposées du caisson de torsion (60) et fixées respectivement à deux profilés creux (10-E) correspondants.

6. Aéronef (200), comprenant au moins un caisson de torsion (60) selon l'une quelconque des revendications 1 à 5, formant un caisson central de voilure ou un caisson latéral de voilure.

7. Procédé de fabrication d'un caisson de torsion (60) pour aéronef, **caractérisé en ce qu'**il comprend les étapes suivantes :
A) mettre à disposition des profilés creux (10, 110), présentant chacun deux bords de profilé (24A, 24B) respectifs opposés ainsi que deux ouvertures (26) respectives opposées circonscrites par les deux bords de profilé (24A, 24B) respectivement, chaque profilé creux étant conformé de manière à entourer intégralement un espace interne (22) reliant mutuellement les deux ouvertures (26) du profilé,
B) mettre à disposition des nervures de rigidification (12, 112), comprenant chacune une âme (30) respective, et une semelle (32, 132) respective qui s'étend à partir de l'âme (30) tout autour de cette dernière, et qui présente deux bords de semelle (38A, 38B) agencés respectivement de part et d'autre de l'âme (30), puis
C) souder chacun des deux bords de semelle (38A, 38B) de la semelle (32, 132) de chaque nervure de rigidification (12, 112) à un bord de profilé (24A, 24B) correspondant d'un profilé creux (10, 110) correspondant, au moyen d'une technique de soudage bord-à-bord, de manière à obtenir le caisson de torsion (60), dans lequel les profilés creux (10, 110) et les nervures de rigidification (12, 112) sont agencés en alternance les uns derrière les autres selon une direction d'alignement (D).

8. Procédé selon la revendication 7, dans lequel la technique de soudage bord-à-bord est choisie parmi le soudage par friction malaxage et le soudage laser.

9. Procédé selon l'une quelconque des revendications 7 à 8, dans lequel l'étape A comporte la fabrication des profilés creux (10, 110) par extrusion.

10. Procédé selon la revendication 9, dans lequel la fabrication des profilés creux par extrusion comporte, pour chacun des profilés creux (10, 110), la fabrication par extrusion de profilés élémentaires (180) puis l'assemblage des profilés élémentaires par soudage.

## Patentansprüche

1. Torsionskasten (60) für ein Luftfahrzeug, **dadurch gekennzeichnet, dass** er Hohlprofile (10, 110) und Versteifungsrippen (12, 112) beinhaltet, die abwechselnd Ende an Ende, das heißt hintereinander liegend, gemäß einer Ausrichtungsrichtung (D) angeordnet sind, wobei jedes Hohlprofil (10, 110) zwei jeweilige gegenüberliegende Profilränder (24A, 24B) sowie zwei jeweilige gegenüberliegende Öffnungen (26), die jeweils durch die zwei Profilränder (24A, 24B) begrenzt werden, aufweist, wobei jedes Hohlprofil (10, 110) so ausgebildet ist, dass es einen Innenraum (22), der die zwei Öffnungen (26) des Hohlprofils miteinander verbindet, vollständig umschließt, und wobei jede Versteifungsrippe (12, 112) einen jeweiligen Steg (30) und einen jeweiligen Flansch (32, 132) beinhaltet, welcher sich von dem Steg (30) komplett um diesen herum erstreckt und zwei Flanschränder (38A, 38B) aufweist, die jeweils auf beiden Seiten des Stegs (30) angeordnet und jeweils an zwei der jeweiligen Profilränder (24B, 24A) von zwei entsprechenden Hohlprofilen (10, 110) geschweißt sind.

2. Torsionskasten nach Anspruch 1, wobei jedes Hohlprofil (10, 110) einstückig ausgebildet ist.

3. Torsionskasten nach Anspruch 1 oder 2, wobei jedes Hohlprofil (110) und der Flansch (132) jeder Versteifungsrippe (112) Wellen quer zu der Ausrichtungsrichtung (D) aufweisen.

4. Torsionskasten nach einem der Ansprüche 1 bis 3, der ferner Kastenträger (40) beinhaltet, die jeweils an den jeweiligen Flanschen (32, 132) der Versteifungsrippen (12, 112) angebracht sind und sich auf einer gleichen Seite des Torsionskastens (60) erstrecken, außerhalb eines Innenvolumens des Torsionskastens, das durch die Hohlprofile (10, 110) und durch die jeweiligen Flansche (32, 132) der Versteifungsrippen (12, 112) abgegrenzt wird.

5. Torsionskasten nach einem der Ansprüche 1 bis 4, der ferner zwei Endrippen (14) beinhaltet, die an zwei entgegengesetzten Enden des Torsionskastens (60) angeordnet und jeweils an zwei entsprechenden Hohlprofilen (10-E) befestigt sind.

6. Luftfahrzeug (200), das mindestens einen Torsionskasten (60) nach einem der Ansprüche 1 bis 5 beinhaltet, der einen mittleren Flügelkasten oder einen seitlichen Flügelkasten bildet.

7. Verfahren zur Herstellung eines Torsionskastens (60) für ein Luftfahrzeug, **dadurch gekennzeichnet, dass** es die folgenden Schritte beinhaltet:
A) Bereitstellen von Hohlprofilen (10, 110), die jeweils zwei jeweilige gegenüberliegende Profilränder (24A, 24B) sowie zwei jeweilige gegenüberliegende Öffnungen (26), die jeweils durch die zwei Profilränder (24A, 24B) begrenzt werden, aufweisen, wobei jedes Hohlprofil so ausgebildet ist, dass es einen Innenraum (22), der die zwei Öffnungen (26) des Profils miteinander verbindet, vollständig umschließt,
B) Bereitstellen von Versteifungsrippen (12, 112), die jeweils einen jeweiligen Steg (30) und einen jeweiligen Flansch (32, 132) beinhalten, welcher sich von dem Steg (30) komplett um diesen herum erstreckt und zwei Flanschränder (38A, 38B) aufweist, die jeweils auf beiden Seiten des Stegs (30) angeordnet sind, anschließend
C) Schweißen jedes der zwei Flanschränder (38A, 38B) des Flansches (32, 132) jeder Versteifungsrippe (12, 112) an einen entsprechenden Profilrand (24A, 24B) eines entsprechenden Hohlprofils (10, 110) mittels einer Stumpfschweißtechnik, um den Torsionskasten (60) zu erhalten, wobei die Hohlprofile (10, 110) und die Versteifungsrippen (12, 112) abwechselnd hintereinander liegend gemäß einer Ausrichtungsrichtung (D) angeordnet sind.

8. Verfahren nach Anspruch 7, wobei die Stumpfschweißtechnik aus Rührreibschweißen und Laserschweißen ausgewählt wird.

9. Verfahren nach einem der Ansprüche 7 bis 8, wobei der Schritt A die Herstellung der Hohlprofile (10, 110) durch Extrusion umfasst.

10. Verfahren nach Anspruch 9, wobei die Herstellung der Hohlprofile durch Extrusion für jedes der Hohlprofile (10, 110) die Herstellung von Profilelementen (180) durch Extrusion, gefolgt von dem Zusammenbau der Profilelemente durch Schweißen umfasst.

## Claims

1. Torsion box (60) for an aircraft, **characterized in that** it comprises hollow profiles (10, 110) and stiffening ribs (12, 112), arranged alternately end-to-end, i.e. one behind the other, in a direction of alignment (D), each hollow profile (10, 110) having two opposite respective profile edges (24A, 24B) and two opposite respective openings (26) circumscribed by the two profile edges (24A, 24B) respectively, each hollow profile (10, 110) being shaped so as to completely surround an internal space (22) mutually connecting the two openings (26) in the hollow profile, and each stiffening rib (12, 112) comprising a respective web (30), and a respective flange (32, 132) which extends from the web (30) all around the latter, and which has two flange edges (38A, 38B) arranged respectively on either side of the web (30) and respectively welded to two of the respective profile edges (24B, 24A) of two corresponding hollow profiles (10, 110).

2. Torsion box according to Claim 1, in which each hollow profile (10, 110) is formed in one piece.

3. Torsion box according to Claim 1 or 2, in which each hollow profile (110) and the flange (132) of each stiffening rib (112) have corrugations transverse to the direction of alignment (D).

4. Torsion box according to any one of Claims 1 to 3, also comprising on-box beams (40) connected respectively to the respective flanges (32, 132) of the stiffening ribs (12, 112) and extending on one and the same side of the torsion box (60), on the outside of an interior volume of the torsion box delimited by the hollow profiles (10, 110) and by the respective flanges (32, 132) of the stiffening ribs (12, 112).

5. Torsion box according to any one of Claims 1 to 4, also comprising two end ribs (14) arranged at two opposite ends of the torsion box (60) and fixed respectively to two corresponding hollow profiles (10-E).

6. Aircraft (200) comprising at least one torsion box (60) according to any one of Claims 1 to 5, forming a central wing box or a lateral wing box.

7. Method for manufacturing a torsion box (60) for an aircraft, **characterized in that** it comprises the following steps:
A) providing hollow profiles (10, 110), each having two opposite respective profile edges (24A, 24B) and two opposite respective openings (26) circumscribed by the two profile edges (24A, 24B) respectively, each hollow profile being shaped so as to completely surround an internal space (22) mutually connecting the two openings (26) in the profile,
B) providing stiffening ribs (12, 112), each comprising a respective web (30), and a respective flange (32, 132) which extends from the web (30) all around the latter, and which has two flange edges (38A, 38B) arranged respectively on either side of the web (30), then
C) welding each of the two flange edges (38A, 38B) of the flange (32, 132) of each stiffening rib (12, 112) to a corresponding profile edge (24A, 24B) of a corresponding hollow profile (10, 110), by means of a butt-welding technique, so as to obtain the torsion box (60), in which the hollow profiles (10, 110) and the stiffening ribs (12, 112) are arranged alternately one behind the other in a direction of alignment (D).

8. Method according to Claim 7, in which the butt-welding technique is chosen from friction stir welding and laser welding.

9. Method according to either one of Claims 7 and 8, in which the step A involves the manufacture of the hollow profiles (10, 110) by extrusion.

10. Method according to Claim 9, in which the manufacture of the hollow profiles by extrusion involves, for each of the hollow profiles (10, 110), the manufacture by extrusion of individual profiles (180) then the assembly of the individual profiles by welding.
